# EUROPEAN PATENT APPLICATION

(11) **EP 2 779 384 A2**
(43) Date of publication of application: **17.09.2014**
(21) Application number: 14160282.1
(22) Date of filing: 17.03.2014
(51) Int. Cl.: H02K 17/16

(54) **High speed induction electrical machine**

(30) Priority: 15.03.2013 US 201361800646 P; 14.03.2014 US 201414213952
(71) Applicant: Ingersoll-Rand Company, Davidson, NC 28036 (US)
(72) Inventor: Boxberg, Frederik Andreas, 01600 Vantaa (FI); Maki-Ontto, Petri Juhani, 02710 Espoo (FI); Saari, Juha Tuomas, 02130 Espoo (FI)
(74) Representative: Schicker, Silvia

(57) **Abstract**

A unique electrical machine includes a plurality of fasteners extending only partially into a rotor core of an induction rotor through a short circuit ring, wherein the fasteners cooperate to balance the induction rotor and/or mechanically support the short-circuit ring. A unique method of assembling an electrical rotor machine includes extending fasteners into a rotor core of a rotor through a component, and employing the fasteners to balance the rotor and/or mechanically support the component. Other embodiments include apparatuses, systems, devices, hardware, methods, and combinations for electrical rotor machines. Further embodiments, forms, features, aspects, benefits, and advantages of the present application will become apparent from the description and figures provided herewith.

## Description

### Cross Reference to Related Applications

The present application claims benefit of U.S. Provisional Patent Application No. 61/800,646 filed March 15, 2013, entitled HIGH SPEED INDUCTION MOTOR ROTOR, which is incorporated herein by reference.

### Field of the Invention

The present invention relates to electrical rotor machines, and in particular, high-speed induction machines such as high speed induction motors and/or generators.

### Background

Induction rotor machines, such as induction motors and generators, are employed in a wide variety of machines and systems. The structural integrity and balancing of induction rotors remains an area of interest. Some existing systems have various shortcomings, drawbacks, and disadvantages relative to certain applications. Accordingly, there remains a need for further contributions in this area of technology.

### Summary

One embodiment of the present invention includes a unique electrical machine having a plurality of fasteners extending only partially into a rotor core of an induction rotor through a short circuit ring. One embodiment of the present invention includes a unique method of assembling an electrical rotor machine, including extending fasteners into a rotor core of an induction rotor through a component. Other embodiments include apparatuses, systems, devices, hardware, methods, and combinations for electrical rotor machines. Further embodiments, forms, features, aspects, benefits, and advantages of the present application will become apparent from the description and figures provided herewith.

### Brief Description of the Drawings

The description herein makes reference to the accompanying drawings wherein like reference numerals refer to like parts throughout the several views, and wherein:
FIG. 1 schematically depicts some aspects of a non-limiting example of an electrical rotor machine in accordance with an embodiment of the present invention.
FIG. 2 depicts some aspects of a non-limiting example of a rotor of an electrical rotor machine in accordance with an embodiment of the present invention.
FIG. 3 is a cross-sectional view of the rotor of FIG. 2.
FIG. 4 is a partial cross-section illustrating some aspects of a non-limiting example of a rotor for an electrical rotor machine in accordance with an embodiment of the present invention.
FIG. 5 is a partial cross-section illustrating some aspects of a non-limiting example of a rotor for an electrical rotor machine in accordance with another embodiment of the present invention.

### Detailed Description

For purposes of promoting an understanding of the principles of the invention, reference will now be made to the embodiments illustrated in the drawings, and specific language will be used to describe the same. It will nonetheless be understood that no limitation of the scope of the invention is intended by the illustration and description of certain embodiments of the invention. In addition, any alterations and/or modifications of the illustrated and/or described embodiment(s) are contemplated as being within the scope of the present invention. Further, any other applications of the principles of the invention, as illustrated and/or described herein, as would normally occur to one skilled in the art to which the invention pertains, are contemplated as being within the scope of the present invention.

In one aspect, the present invention pertains to electrical machines, i.e., electrical rotor machines, such as electric induction motors and/or generators, and particularly, but not exclusively, to electrical machine rotors, e.g., for use in such machines, with improved mass balancing features and/or improved structural features. An induction rotor may include coated steel layers (e.g., a lamination rotor), a squirrel cage, and a shaft. The squirrel cage may include a number of conductors, e.g., aligned along the axis of the rotor or aligned at an angle to the axis of the rotor; and a short-circuit ring or shorting ring, e.g., at each end of the rotor. The short-circuit rings contact the conductors at both ends of the rotor. Squirrel cages may be made, for example, by casting aluminum into the rotor core, although other manufacturing techniques may be employed. Aluminum is often used for the squirrel cage because of its good electrical conductivity. However, the mechanical properties of aluminum are a tradeoff to its electrical conductivity, as aluminum is typically weaker than other metals/alloys having lesser conductivity.

In addition to electrical machines and electrical machine rotors having improved balance features and/or improved short-circuit rings or support for short-circuit rings, aspects of the present invention include methods of balancing a rotor of an electrical machine, and methods of supporting the short-circuit ring to effectively improve the mechanical strength of the short-circuit ring. In some embodiments, the aforementioned methods may be combined. Although relating to electrical machines, the invention has particular applicability to, but is not limited to, high speed electrical machines, such as high-speed induction rotors.

At high speeds, the short-circuit ring of an induction rotor is highly mechanically strained during the operation of the motor. In one aspect of the invention, the short-circuit ring is supported by fasteners, e.g., pins or bolts attached to the rotor. These fasteners may also be utilized as fastening mechanisms for adding and/or removing balancing mass. The fasteners may be attached to the rotor core, through the short-circuit ring. The size of the holes in the short-circuit ring relative to the size of the portion of the fastener disposed within the short-circuit ring may be optimized for improved mechanical support of the short-circuit ring without adding critical sources of thermal stress (e.g., between the different materials of the rotor). The mechanical capacity of a rotor is an important design issue in high-speed motors, as the forces exerted on the rotor can be great. The mechanical capacity of the short-circuit rings is also an important design feature of high-speed rotors, due to the mechanical properties of aluminum. In addition to mechanically induced strain, an aluminum short-circuit ring is also exposed to thermal strain, resulting from mechanical contact between the rotor and short-circuit ring, and the difference in thermal expansion coefficients between the short-circuit ring and the rotor core, e.g., a laminated rotor core. Aluminum has a relatively small Young's modulus (approximately 70 GPa) and a small yield stress value (approximately 40-120 MPa - depending on the fabrication process). Aluminum is also sensitive to fatigue degradation as it deforms plastically relatively easily by both fast-rate and slow-rate strains. Accordingly, short-circuit rings of high-speed induction rotors may be exposed to large mechanical loads, and may be easily degraded or broken by high-speed rotation.

A rotor of an induction electrical machine, such as a motor and/or generator, may be mass compensated and balanced for improved rotation about the axis of the shaft and for reduced loading on the bearings. This may be done, for example, by either adding or removing mass, e.g., at one or both of the rotor ends. High-speed motors preferably receive more accurate mass balancing than conventional low-speed motors. However, an accurate mass compensation/balance is difficult, in practice, for many reasons. In addition, the shape and the mechanical strength of the short-circuit rings impose additional challenges, e.g., because they are made of aluminum, and e.g., cover a large portion of the rotor ends.

Some aspects of the present invention ease the process of mass balancing by adding additional mass to desired locations on the rotor rather than removing mass from a solid short-circuit ring, and by removing mass by shortening removable pins and/or bolts rather than removing mass from the solid short-circuit ring. In some aspects of the present invention, mechanical support may also or alternatively be added to the short-circuit rings, e.g., via the use of pins and/or bolts.

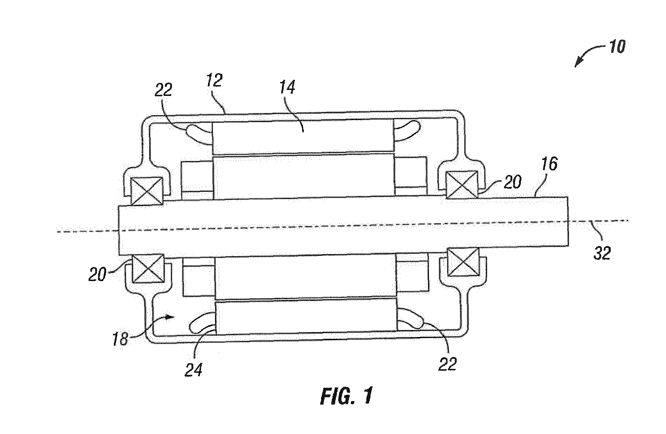

Referring to the drawings, and in particular FIG. 1, some aspects of a non-limiting example of an electrical machine 10 in accordance with an embodiment of the present invention are schematically depicted. In one form, electrical machine 10 is an induction motor. In other embodiments, electrical machine 10 may take other forms. Electrical machine 10 includes a casing 12, a stator 14, a shaft 16, an induction rotor 18 and bearings 20. Casing 12 is configured to house stator 14, shaft 16, induction rotor 18 and bearings 20. In one form, bearings 20 are mounted in casing 12, e.g., an end plate of casing 12. In other embodiments, bearings 20 may be mounted and coupled to casing 12 via one or more other structures. Bearings 20 are structured to radially support induction rotor 18, and to react inductor rotor 18 thrust loads.

Stator 14 includes a plurality of stator windings 22 and a stator core 24. Induction rotor 18 is disposed radially inward of stator core 24. In one form, stator 14 circumferentially encompasses induction rotor 18, although in other embodiments, stator 14 may only partially encompass induction rotor 18 e.g., in the form of segments disposed circumferentially around stator 14. Induction rotor 18 is configured for electromagnetic cooperation with stator 14, e.g., to convert electrical power into mechanical power for delivery via shaft 16 in some embodiment and/or convert mechanical power received from shaft 16 into electrical power for delivery via stator 14 in other embodiments.

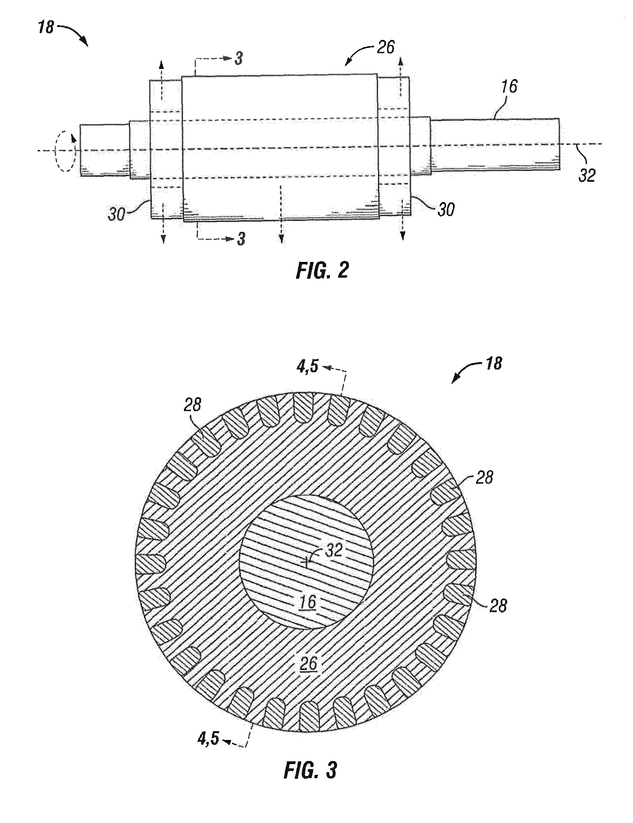

Referring now to FIGS. 2 and 3, some aspects of a non-limiting example of induction rotor 18 in accordance with an embodiment of the present invention are schematically illustrated. Rotor 18 includes a rotor core 26, a plurality of conductors 28 circumferentially spaced apart about rotor core 26, and short-circuit shorting rings 30. Inductor rotor 18 rotates about an axis of rotation 32. In one form, rotor core 26 is a laminated rotor core formed of a plurality of laminations of, e.g., steel or iron-based sheets having nonconductive coatings, which are stacked and affixed together to form the rotor. In other embodiments, rotor core 26 may take other forms. In the illustrated example, two short-circuit rings are depicted. It will be understood that in other embodiments, any number of short-circuit rings may be employed. Short-circuit rings 30 are in electrical communication with each of conductors 28. In one form, short-circuit rings 30 and conductors 28 are integral, e.g., integrally formed about rotor core 26, such as by casting. In other embodiments, short-circuit rings 30 may be brazed to conductors 28, welded to conductors 28 or otherwise mechanically attached or affixed to conductors 28, including via the use of pins, bolts, or other fasteners. Although described using the term "ring," and depicted in the FIGS. generally in the shape of a ring, it will be understood that short-circuit rings 30 may be of any suitable shape.

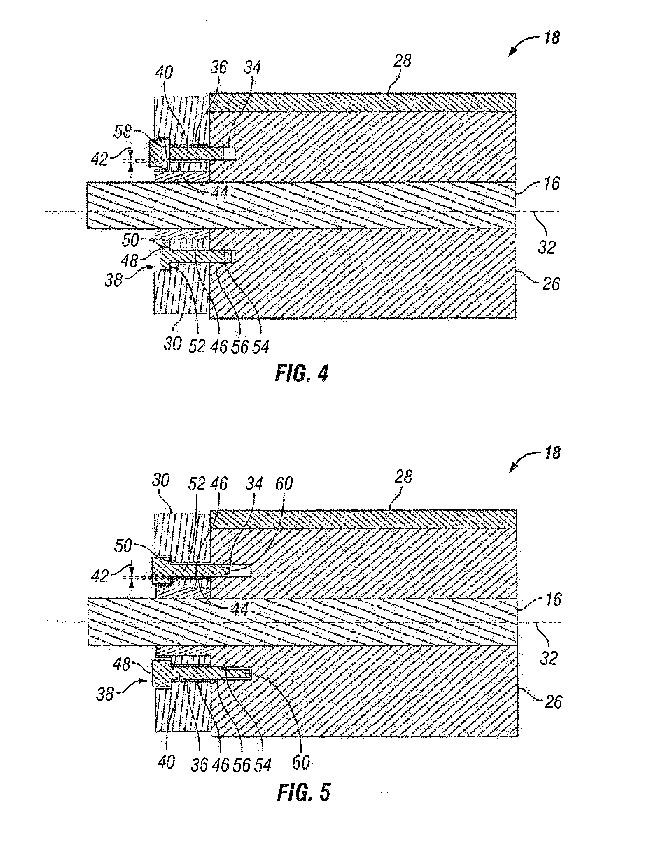

Referring to FIGS. 4 and 5, some aspects of a non-limiting example of induction rotor 18 in accordance with an embodiment of the present invention are schematically illustrated. In the embodiments of FIGS. 4 and 5, rotor core 26 includes a plurality of holes 34. In one form, holes 34 are formed on each end of rotor core 26. In other embodiments, holes 34 may be formed on only a single end of rotor core 26. Holes 34 extend into rotor core 26, e.g., in an axial direction parallel to the axis of rotation 32. Holes 34 are spaced apart from conductors 28. In one form, holes 34 extend only partially into rotor core 26. In other embodiments, holes 34 may extend through the axial length of rotor core 26. Each short-circuit ring 30 includes a plurality of holes 36 that extend therethrough, e.g., in the axial direction, and which are aligned with holes 34 of rotor core 26.

Installed into and disposed at least partially in holes 34 and 36 are a plurality of fasteners 38. In one form, by virtue of the locations of holes 34 and 36, fasteners 38 are spaced apart from conductors 28. In other embodiments, some or all of holes 34 and 36 may be partially or fully aligned with and formed into conductors 28. In such embodiments, a corresponding some or all fasteners 38 may be in electrical communication with respective conductors 28. In one form, fasteners 38 are formed of a ferrous material, e.g., in order to reduce or eliminate changes in the magnetic properties of induction rotor 18 stemming from the provision of fasteners 38, holes 34 and/or holes 36. In other embodiments, other materials may be used in addition to or in place of a ferrous material. In various embodiments, fasteners 38 may take one or more of a plurality of forms. For example, fasteners 38 may be pins and/or bolts. Fasteners 38 include a shank 40. In one form, shanks 40 and holes 36 are sized to yield a gap 42 there between. Gap 42 extends radially outward from axis of rotation and 32, and in various may also extend in other directions. In one form, gap 42 is disposed between a surface 44 of holes 36 and a surface 46 of shanks 40, wherein surfaces 44 and 46 are those surfaces of respective holes 36 and shanks 40 that would come into closer proximity with each other under conditions of increasing rotor speed and/or temperature (and in some embodiments, other factors, as well) as would cause short-circuit ring 30 to radially expand at a greater rate than rotor core 26. In various embodiments, gap 42 may extend fully or partially around the circumference of shank 40 and hole 36. In one form, gap 42 is sized, e.g., via the respective geometric sizes of shanks 40 and holes 36, to prevent a mechanical contact or interference, at least in the radial direction, between holes 36 and shanks 40 under selected conditions. In one form, the selected conditions include maximum operating speed of induction rotor 18 coupled with the maximum operating temperature of induction rotor 18, e.g., as measured in short-circuit ring 30 and the end portions of rotor core 26 and conductors 28 that are adjacent to short-circuit ring 30. By preventing the aforementioned mechanical interference, undesirable stress fields within short-circuit ring 30 may be avoided, and fretting damage to short-circuit ring 30 may be avoided. In other embodiments, the size and geometry of gap 42 may vary with the needs of the application. In still other embodiments, a gap may not be formed between shank 40 and holes 36.

In some embodiments, fasteners 38 include a head 48 having a clamping surface 50 that is operative to engage a corresponding clamping surface 52 on short-circuit ring 30 for transmitting clamping loads into short-circuit ring 30 to clamp short-circuit ring 30 against rotor core 26 and/or conductors 28 to thereby support short-circuit ring 30. In some embodiments, fasteners 38 are used to clamp short-circuit ring 30 against rotor core 26 or against conductors 28, instead of clamping short-circuit ring 30 against both rotor core 26 and against conductors 28. By clamping short-circuit ring 30 against rotor core 26 and/or conductors 28, short-circuit ring 30 centrifugal loads are transferred to the corresponding rotor core 26 and/or conductors 28, e.g., via friction at the mechanical interface between short-circuit ring 30 and rotor core 26 and/or conductors 28. This effectively strengthens short-circuit ring 30 by reducing its centrifugally induced stresses, which thus increases the life of short-circuit ring 30.

Fasteners 38 include a retention feature 54. Holes 34 include a retention feature 56. Retention features 54 and 56 are configured to engage each other to retain fasteners 38 in holes 34. In some embodiments, retention feature 54 and 56 are configured to engage each other sufficiently to pretension fasteners 38 and clamp short-circuit ring 30 against rotor core 26 and/or conductors 28. The amount of pretension may vary with the needs of the application. In one form, retention features 54 and 56 are threads. In some embodiments, retention feature 54 and 56 may be geometric features, such as cylinders and corresponding cylindrical openings, respectively, that form an interference fit when engaged, e.g., upon installation of fasteners into holes 34. In other embodiments, retention features 54 and 56 may take other forms.

During the operation of electrical machine 10, induction rotor 18 may achieve high rotational speeds, which imparts centrifugal loading into short-circuit rings 30. In order to reduce imbalance loads and wear on bearings 20, it is desirable to mass compensate induction rotor 18 to balance induction rotor 18, e.g., by adding balance mass at selected locations to induction rotor 18 or by removing balance mass from selected locations on induction rotor 18. Although it may be possible to balance induction rotor 18, for example, by selectively removing material from one or both short-circuit rings 30, e.g., by grinding or another machining process, doing so may be time consuming, expensive (particularly when too much material is inadvertently removed), and may result in, for example, the formation of crack initiation sites, stress risers, undesirable reductions in cross-sectional area, and potentially degraded material properties in the vicinity of the removed material e.g. by virtue of a heat affected zone generated by high temperatures stemming from the use of an improper, worn or otherwise unsuitable or undesirable machining implement. Accordingly, in some embodiments of the present invention, fasteners 38 are used for balancing induction rotor 18. In some embodiments, fasteners 38 may be used for both clamping short-circuit ring 30 to rotor core 26 and/or conductors 28 and for balancing induction rotor 18. In other embodiments, fasteners 38 may be used only for balancing induction rotor 18 or only for clamping short-circuit ring 30 to rotor core 26 and/or conductors 28.

In some embodiments, fasteners 38 may be used to attach a balance weight 58 at selected radial and circumferential locations on induction rotor 18, e.g., wherein the balance weight 58 is retained by head 48 of fasteners 38, as depicted in FIG. 4. In other embodiments, balance weight 58 may take other forms, and/or may be retained by head 48 or may be retained by other means and/or may be disposed in other locations. In other embodiments, fasteners 38 may include a balance portion 60, e.g., extending from shank 40. For example, in some embodiments, all or part of balance portion 60 may be removed from selected fasteners 38, e.g., via grinding or other machining, in order to balance induction rotor 18, an example of which is depicted in FIG. 5, which illustrates two fasteners 38, wherein the upper fasteners 38 includes a balance portion 60 that has been machined to remove some of its mass, whereas the lower fastener 38 balance portion retains its full length. In other embodiments, fasteners 38 may be manufactured with balance portions 60 having various masses. In such embodiments, the balancing of induction rotor 18 may include selecting desired fasteners 38, based on mass, and installing the desired fasteners 38 at the requisite hole 34, 36 locations to achieve the desired balance. In these embodiments, fine-tuning may be achieved by grinding the desired fasteners to remove additional mass from the balance portions 60. Although FIG. 5 illustrates balance portion 60 as being disposed within rotor core 26, it will be understood that in various embodiments, balance portion 60 may be disposed at any convenient location.

Embodiments of the present invention include electrical machine, comprising: a stator; a shaft configured to rotate about an axis of rotation, wherein said axis of rotation defines an axial direction; an induction rotor for electromagnetic cooperation with the stator, wherein the induction rotor is coupled to the shaft and includes: a rotor core extending in the axial direction and having a plurality of first holes; and a squirrel cage having a plurality of conductors and a short-circuit ring in electrical communication with the plurality of conductors and having a plurality of second holes spaced apart from the conductors; wherein the induction rotor includes a plurality of fasteners extending through the second holes in the short-circuit ring, extending into the first holes only partially into the rotor core, and cooperating to balance the induction rotor and/or mechanically support the short-circuit ring; and a bearing structured to radially support the induction rotor via the shaft.

In a refinement, the fasteners are configured to clamp the short-circuit ring against the rotor core and/or the conductors.

In another refinement, the first holes include a first threaded portion; and the fasteners include a second threaded portion in threading engagement the first threaded portion.

In yet another refinement, the fasteners include a head configured to axially engage the short-circuit ring for clamping the short-circuit ring to the rotor core and/or the conductors.

In still another refinement, the fasteners include a first clamping surface; the short-circuit ring includes a second clamping surface in mating engagement with the first clamping surface; and the first clamping surface engages the second clamping surface to clamp the short-circuit ring against the rotor core and/or the conductors.

In yet still another refinement, the fastener includes a shank, and wherein the second holes and the shank form a gap there between.

In a further refinement, the gap extends at least in a radial direction.

In a yet further refinement, at least one of the fasteners is configured to secure a balance mass to the induction rotor.

In a still further refinement, the balance mass is a washer.

In a yet still further refinement, wherein the balance mass is a portion of the at least one fastener.

In an additional refinement, the fasteners are configured to clamp the short-circuit ring against the rotor core and/or the conductors, and wherein at least one of the fasteners is configured to secure a balance mass to the induction rotor.

In another refinement, wherein the fasteners have an interference fit with the first holes in the rotor core.

Embodiments of the present invention include a method of assembling an electrical machine, comprising: forming a rotor having a rotor core and a component disposed adjacent a face of the rotor core; forming first holes in a rotor core, wherein the first holes extend at least partially into the rotor core; forming second holes in the component; extending fasteners through the second holes and into the first holes, only partially into the rotor core; and employing the fasteners to balance the rotor and/or mechanically support the component.

In a refinement, the method also includes forming threads in the first holes; forming threads on the fasteners; and threadingly engaging the fasteners with the first holes.

In another refinement, the method also includes forming the first holes and the fasteners to generate an interference fit between the first holes and the fasteners.

In yet another refinement, the method also includes clamping the component against the rotor core.

In still another refinement, the method also includes balancing the rotor, wherein the balancing includes securing a balance mass to the rotor with at least one of the fasteners.

In yet still another refinement, the balancing includes removing a portion of at least one of the fasteners and/or selecting for installation into the rotor a fastener having a lesser mass than another fastener.

In a further refinement, the method also includes clamping the component against the rotor core; and balancing the rotor, wherein the balancing of the rotor includes securing a balance mass to the rotor with at least one of the fasteners and/or removing a portion of at least one of the fasteners.

Embodiments of the present invention include an electrical machine, comprising: a stator; a shaft configured to rotate about an axis of rotation, wherein said axis of rotation defines an axial direction; an induction rotor coupled to the shaft, wherein the induction rotor includes a squirrel cage having a plurality of conductors and a short-circuit ring in electrical communication with the plurality of conductors, wherein the induction rotor includes a rotor core extending along the axis of rotation; a bearing structured to radially support the induction rotor via the shaft; and means for supporting the short-circuit ring and/or balancing the induction rotor..

While the invention has been described in connection with what is presently considered to be the most practical and preferred embodiment, it is to be understood that the invention is not to be limited to the disclosed embodiment(s), but on the contrary, is intended to cover various modifications and equivalent arrangements included within the spirit and scope of the appended claims, which scope is to be accorded the broadest interpretation so as to encompass all such modifications and equivalent structures as permitted under the law. Furthermore it should be understood that while the use of the word preferable, preferably, or preferred in the description above indicates that feature so described may be more desirable, it nonetheless may not be necessary and any embodiment lacking the same may be contemplated as within the scope of the invention, that scope being defined by the claims that follow. In reading the claims it is intended that when words such as "a," "an," "at least one" and "at least a portion" are used, there is no intention to limit the claim to only one item unless specifically stated to the contrary in the claim. Further, when the language "at least a portion" and/or "a portion" is used the item may include a portion and/or the entire item unless specifically stated to the contrary.

## Claims

1. An electrical machine, comprising:
a stator;
a shaft configured to rotate about an axis of rotation, wherein the axis of rotation defines an axial direction;
an induction rotor for electromagnetic cooperation with the stator, wherein the induction rotor is coupled to the shaft and includes: a rotor core extending in the axial direction and having a plurality of first holes; and a squirrel cage having a plurality of conductors and a short-circuit ring in electrical communication with the plurality of conductors and having a plurality of second holes spaced apart from the conductors; wherein the induction rotor includes a plurality of fasteners extending through the second holes in the short-circuit ring, extending into the first holes only partially into the rotor core, and cooperating to balance the induction rotor and/or mechanically support the short-circuit ring; and
a bearing structured to radially support the induction rotor via the shaft.

2. The electrical machine of claim 1, wherein the fasteners are configured to clamp the short-circuit ring against the rotor core and/or the conductors.

3. The electrical machine of claim 1, wherein the first holes include a first threaded portion; wherein the fasteners include a second threaded portion in threading engagement the first threaded portion.

4. The electrical machine of claim 3, wherein the fasteners include a head configured to axially engage the short-circuit ring for clamping the short-circuit ring to the rotor core and/or the conductors; or
wherein the fasteners include a first clamping surface; wherein the short-circuit ring includes a second clamping surface in mating engagement with the first clamping surface; and wherein the first clamping surface engages the second clamping surface to clamp the short-circuit ring against the rotor core and/or the conductors.

5. The electrical machine of claim 1, wherein the fastener includes a shank, and wherein the second holes and the shank form a gap therebetween.

6. The electrical machine of claim 5, wherein the gap extends at least in a radial direction.

7. The electrical machine of claim 1, wherein at least one of the fasteners is configured to secure a balance mass to the induction rotor.

8. The electrical machine of claim 7, wherein the balance mass is a portion of the at least one fastener.

9. The electrical machine of claim 1, wherein the fasteners are configured to clamp the short-circuit ring against the rotor core and/or the conductors, and wherein at least one of the fasteners is configured to secure a balance mass to the induction rotor.

10. The electrical machine of claim 1, wherein the fasteners have an interference fit with the first holes in the rotor core.

11. A method of assembling an electrical machine, comprising:
forming a rotor having a rotor core and a component disposed adjacent to a face of the rotor core;
forming first holes in a rotor core, wherein the first holes extend at least partially into the rotor core;
forming second holes in the component;
extending fasteners through the second holes and into the first holes, only partially into the rotor core; and
employing the fasteners to balance the rotor and/or mechanically support the component.

12. The method of claim 11, further comprising:
forming threads in the first holes;
forming threads on the fasteners; and
threadingly engaging the fasteners with the first holes; or
further comprising forming the first holes and the fasteners to generate an interference fit between the first holes and the fasteners.

13. The method of claim 11, further comprising clamping the component against the rotor core; or
further comprising balancing the rotor, wherein the balancing includes securing a balance mass to the rotor with at least one of the fasteners; or
further comprising balancing the rotor, wherein the balancing includes removing a portion of at least one of the fasteners and/or selecting for installation into the rotor a fastener having a lesser mass than another fastener.

14. The method of claim 11, further comprising:
clamping the component against the rotor core; and
balancing the rotor, wherein the balancing of the rotor includes securing a balance mass to the rotor with at least one of the fasteners and/or removing a portion of at least one of the fasteners.

15. An electrical machine, comprising:
a stator;
a shaft configured to rotate about an axis of rotation, wherein said axis of rotation defines an axial direction;
an induction rotor coupled to the shaft, wherein the induction rotor includes a squirrel cage having a plurality of conductors and a short-circuit ring in electrical communication with the plurality of conductors, wherein the induction rotor includes a rotor core extending along the axis of rotation;
a bearing structured to radially support the induction rotor via the shaft; and
means for supporting the short-circuit ring and/or balancing the induction rotor.
